# EUROPÄISCHE PATENTSCHRIFT

(11) **EP 0 464 529 B1**
(45) Veröffentlichungstag und Bekanntmachung des Hinweises auf die Patenterteilung: **30.08.1995**
(21) Anmeldenummer: 91110297.8
(22) Anmeldetag: 22.06.1991
(51) Int. Cl.: G01F 23/72, G01F 25/00

(54) **Füllstandsmessvorrichtung**
Level measuring device
Dispositif de mesure du niveau

(30) Priorität: 28.06.1990 DE 9007189 U; 29.12.1990 DE 4042235
(43) Veröffentlichungstag der Anmeldung: 08.01.1992
(73) Patentinhaber: Unimess Messtechnische Geräte GmbH, D-61239 Ober-Mörlen (DE)
(72) Erfinder: Urich, Manfred, Dipl.-Ing., D-61250 Usingen (DE)
(74) Vertreter: Haar, Lucas Heinz Jörn, Dipl.-Ing.

(56) Entgegenhaltungen:
- US-A- 4 321 590
- US-A- 4 821 022

## Beschreibung

Die Erfindung betrifft eine Füllstandsmeßvorrichtung, insbesondere für Flüssigkeitstanks, mit einem beweglich gelagerten Schwimmer, der einen Permanentmagneten aufweist und an einem Gleitrohr aus unmagnetischem Werkstoff gelagert ist, das eine durch Magnetkraft berührungslos betätigbare Schaltvorrichtung enthält und an einer Platte oder einer Verschraubung zum Verschließen einer Tanköffnung angeordnet ist.

Eine Füllstandsmeßvorrichtung der angegebenen Art ist aus der US-A-4 321 590 und DE-A-3 632 739 bekannt. Derartige Füllstandsmeßvorrichtungen werden zur kontinuierlichen Erfassung des jeweiligen Füllstands oder als Überfüllsicherung zur Überwachung eines bestimmten Füllstandsgrenzwerts, zum Beispiel eines maximalen Füllstands, in einem Behälter oder Tank eingesetzt. Bei zahlreichen Anwendungsfällen werden an die Zuverlässigkeit von Füllstandsmeßvorrichtungen aus Sicherheitsgründen hohe Anforderungen gestellt. Um diese hohen Anforderungen erfüllen zu können, wird eine Funktionskontrolle für Füllstandsmeßvorrichtungen benötigt.

Aus der DE-AS 1 801 739 ist bereits eine Einrichtung zur Funktionsprüfung eines schwimmergesteuerten Flüssigkeitsstandanzeigers bekannt, bei der ein Prüfmagnet in Längsrichtung eines Schutzrohres aus nichtmagnetisierbarem Werkstoff verschiebbar gehalten ist. In dem Schutzrohr ist ein Schaltmagnet angeordnet, der durch eine senkrechte Stange mit dem Schwimmer des Flüssigkeitsstandanzeigers verbunden ist und durch den außerhalb des Schutzrohres in den zu überwachenden Höhenlagen angeordnete Schalter magnetisch zu betätigen sind. Der Prüfmagnet ist neben dem Schaltmagneten so angeordnet, daß sein Höhenverstellbereich denjenigen des Schaltmagneten enthält, und seine Feldstärke ist so bemessen, daß er bei einer Verschiebung die Schalter nicht beeinflußt, wohl aber den Schaltmagneten magnetisch erfaßt und ihn längs des zu prüfenden Bereiches unter Durchschaltung der Schalter mit sich bewegt. Hierdurch ist es möglich, von außen zu kontrollieren, ob der Schwimmer nebst Schaltmagnet frei und ungehindert den Niveauschwankungen der Flüssigkeit folgen kann, ohne daß ein Absenken des Flüssigkeitsniveaus erfolgt. Für eine Füllstandsmeßvorrichtung der eingangs genannten Art ist diese bekannte Prüfeinrichtung nicht geeignet.

Der Erfindung liegt die Aufgabe zugrunde, bei einer Füllstandsmeßvorrichtung der eingangs genannten Art mit einfachen Mitteln eine Funktionskontrolle zu ermöglichen.

Diese Aufgabe wird erfindungsgemäß durch die Merkmale des kennzeichnenden Teils von Anspruch 1 gelöst.

Die Erfindung ermöglicht ein Bewegen des Schwimmers in eine Schaltposition, ohne daß ein zum Anheben des Schwimmers geeigneter Füllstand vorhanden ist. Hierbei kann sowohl die ausreichende Beweglichkeit des Schwimmers in seiner Lagerung als auch das Ansprechen des Signalgebers und der Signalübertragung geprüft werden. Auf diese Weise wird eine vollständige Kontrolle der Funktion der Füllstandsmeßvorrichtung erreicht. Die Verwendung eines nach außen gekapselten Magnetankers gewährleistet eine für viele Anwendungen erforderliche Explosionssicherheit und Dichtheit und ermöglicht eine genaue Dosierung der zur Prüfung einer ausreichenden Bewegbarkeit geeigneten Betätigungskraft. Die Hülse ermöglicht einen gasdichten Verschluß der Füllstandsmeßvorrichtung, wie es beispielsweise bei der Lagerung von explosiven oder umweltgefährdenden Medien erforderlich ist.

Die Betätigungskraft der Betätigungsvorrichtung kann erfindungsgemäß so bemessen sein, daß sie die zum Bewegen des Schwimmers erforderliche minimale Auftriebskraft nicht oder nur geringfügig übersteigt. Eine Einschränkung der Beweglichkeit des Schwimmers durch Kristall- oder Krustenbildung oder durch Korrosion läßt sich daher bereits erfassen, wenn der Schwimmer mit erhöhtem Auftrieb noch bewegbar und funktionsfähig ist.

Die Betätigungsvorrichtung kann erfindungsgemäß so ausgestaltet sein, daß sie von außen zugänglich und von Hand betätigbar ist. Vorzugsweise ist jedoch die Betätigungsvorrichtung mit einem fernsteuerbaren Antrieb versehen, um von einer zentralen Schaltwarte aus durch Ansteuern der Betätigungsvorrichtung eine Funktionskontrolle durchführen zu können.

Gemäß einer vorteilhaften Ausgestaltung der Erfindung kann der Schwimmer durch ein flexibles Seil oder durch eine Kette mit dem Magnetanker verbunden sein oder es kann an dem Magnetanker eine Stange angeordnet sein, die durch eine Öse am Schwimmer hindurchgreift und an ihrem Ende eine Fangvorrichtung für die Öse hat.

Nach einem weiteren Vorschlag der Erfindung kann der Magnetanker auch durch eine Feder mit dem Schwimmer verbunden sein, die durch eine Betätigung des Magnetankers soweit angespannt wird, bis die vorgegebene Bewegungskraft am Schwimmer wirksam ist Durch Abstimmung der Feder läßt sich dabei die Kraft zum Bewegen des Schwimmers in der gewünschten Weise dosieren. Erfindungsgemäß kann weiterhin vorgesehen sein, daß die Feder durch das Gewicht des nicht eingetauchten Schwimmers vorgespannt ist und dadurch einen Teil des Schwimmergewichts kompensiert. Der Schwimmer kann daher kleiner oder schwerer ausgeführt werden.

Die Betätigung des Magnetankers kann mechanisch von Hand, elektrisch, pneumatisch oder hydraulisch erfolgen. In Verbindung mit einer Fernsteuerung kommt vor allem eine elektromagnetische oder pneumatische Betätigung des Magnetankers in Betracht. Zur Betätigung des Magnetankers kann erfindungsgemäß von außen auf die Hülse ein Permanentmagnet aufsetzbar sein, der von Hand, hydraulisch oder Pneumatisch betätigbar ist, oder es kann eine fernsteuerbare Magnetspule auf der Hülse angeordnet sein.

Die Erfindung sieht weiterhin Mittel vor, die geeignet sind, die Schwimmfunktion des Schwimmers der Füllstandsmeßvorrichtung zu überwachen. Dies kann erforderlich sein, wenn der Schwimmer als Hohlkörper ausgebildet ist und auf Grund der auf den Schwimmer einwirkenden Medien die Gefahr besteht, daß der Schwimmer durch Korrosion undicht wird. Um eine Kontrolle der Schwimmfunktion bei einem hohlen Schwimmer zu ermöglichen, ist erfindungsgemäß vorgesehen, daß der Hohlraum des Schwimmers ein unter einem Über- oder Unterdruck stehendes Gas enthält und über ein flexibles Rohr an eine Drucküberwachung angeschlossen ist, die bei einer Abweichung des Gasdrucks von einem vorgegebenen Sollwert ein Signal erzeugt. Wird der Hohlkörper des Schwimmers undicht, so führt dies zur Erzeugung eines Signals, das den Defekt der Füllstandsmeßvorrichtung anzeigt. Die Drucküberwachung kann erfindungsgemäß einen druckbetätigten Schalter aufweisen, der einen Überwachungsstromkreis schaltet.

Das flexible Rohr kann nach einem weiteren Vorschlag der Erfindung als Feder ausgebildet sein, die einen Teil des Schwimmergewichts kompensiert und/oder mit dem Magnetanker verbunden ist. Durch eine solche Mehrfachfunktion des flexiblen Rohrs wird der Aufbau der Füllstandsmeßvorrichtung vereinfacht und die Störsicherheit erhöht. Weiterhin kann vorgesehen sein, daß das flexible Rohr in Form einer Wendel das Gleitrohr mit Abstand umgibt, auf dem der hohle Schwimmer axial geführt ist.

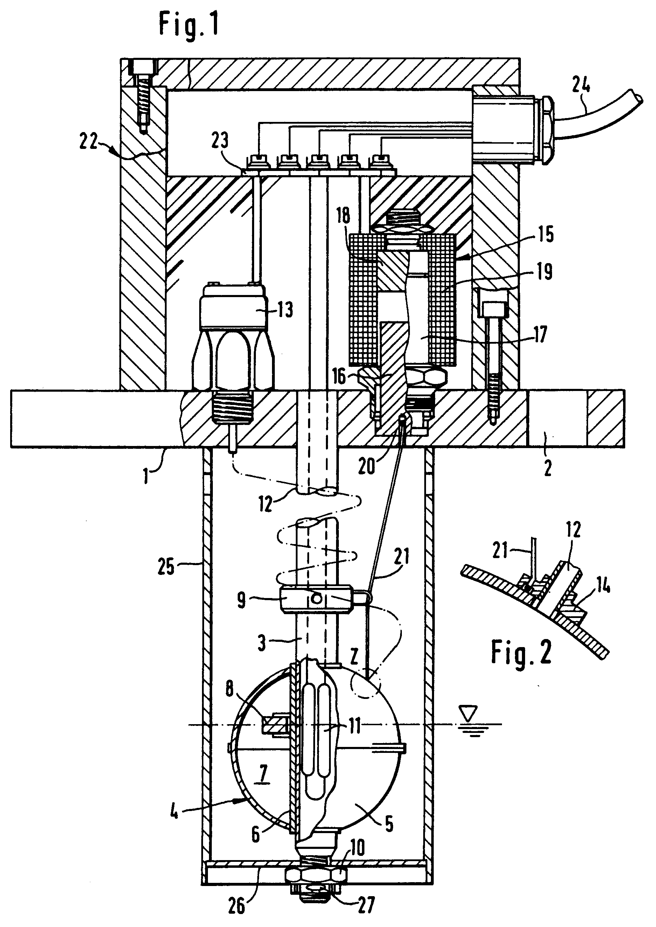

Die Erfindung wird nachfolgend an Hand eines Ausführungsbeispiels näher erläutert, das in der Zeichnung dargestellt ist. Es zeigen
- Figur 1: eine teilweise geschnittene Darstellung einer erfindungsgemäßen Füllstandsmeßvorrichtung mit Korrosions- und Funktionskontrolle und
- Figur 2: eine vergrößerte Schnittdarstellung des Bereichs Z des Schwimmers gemäß Figur 1.

Die in der Zeichnung dargestellte Füllstandsmeßvorrichtung ist als Überfüllsicherung für einen Tank eines Tanklagers konzipiert. Sie besteht aus einer kreisscheibenförmigen Platte 1 mit der eine Öffnung, z.B. im Deckel eines Tanks verschließbar ist. Die Platte 1 weist an ihrem Rand mehrere Bohrungen 2 auf, durch die Schrauben zu ihrer Befestigung hindurchgreifen. An ihrer dem Tankinneren zugewendeten Unterseite ist an der Platte 1 senkrecht zu ihrer Oberfläche ein Gleitrohr 3 aus unmagnetischem Material angeordnet, das in einer zentralen Durchgangsbohrung in der Platte 1 dicht befestigt ist. Das untere Ende des Gleitrohres 3 ist verschlossen, das obere Ende ist auf der Oberseite der Platte 1 offen.

Auf dem Gleitrohr 3 ist ein Schwimmer 4 axial verschiebbar gelagert. Der Schwimmer 4 besteht aus einer Hohlkugel 5, die von einer das Gleitrohr 3 mit radialem Spiel umgebenden Zylinderhülse 6 zentral durchdrungen ist. Wechselweise kann sich auch die Hohlkugel oder ein länglicher Schwimmer neben dem Gleitrohr befinden und an diesem geführt sein. Die Hohlkugel 5 und die Zylinderhülse 6 sind gasdicht miteinander verbunden und umschließen somit einen zylindrischen Hohlraum 7, der den Auftrieb des Schwimmers 4 bestimmt. In dem Hohlraum 7 befindet sich ein die Zylinderhülse 6 umgreifender, ringförmiger Permanentmagnet 8, der magnetisiert ist. Die Zylinderhülse 6 und gegebenenfalls auch die Hohlkugel 5 bestehen aus unmagnetischem Material, beispielsweise aus einem unmagnetischen, korrosionsbeständigen Stahl oder aus Kunststoff. Der Schwimmer 4 ist zwischen einem Anschlagring 9, der mit einer Spannschraube auf dem Gleitrohr 3 festgeklemmt ist, und einer Mutter 10 angeordnet. Im Inneren des Gleitrohrs 3 befinden sich zwei magnetisch betätigbare Schutzgasschalter 11, die in Reihe zueinander in einen Überwachungsstromkreis geschaltet sind. In der in der Zeichnung dargestellten Position des Schwimmers 4 werden die Schutzgasschalter 11 durch den Permanentmagnet 8 in Schließstellung gehalten. Der Überwachungsstromkreis ist geschlossen. Hierdurch kann angezeigt werden, daß der maximale Füllstand im Tank noch nicht überschritten ist.

Um die Dichtheit des Hohlraums 7 des Schwimmers 4 überwachen zu können, ist der Hohlraum 7 über ein flexibles Rohr 12 von geringem Querschnitt an einen Druckschalter 13 angeschlossen, der auf der Oberseite der Platte 1 angeordnet ist. Das flexible Rohr 12 ist in Form einer Wendel um das Gleitrohr 3 mit Abstand mehrfach herumgewunden und nach Art einer Zugfeder vorgespannt und setzt dadurch der Bewegung des Schwimmers 4 keinen Widerstand entgegen, sondern unterstützt die am Schwimmer wirksame Auftriebskraft. An dem Schwimmer 4 ist das Rohr 12 mit Hilfe eines Flanschrings 14 befestigt. Der Hohlraum 7 ist mit einem unter einem Über- oder Unterdruck stehenden Gas gefüllt, welches über das Rohr 12 eine Membran im Druckschalter 13 beaufschlagt und den Schalter des Druckschalters 13 geschlossen hält. Der Druckschalter 13 kann an einen separaten Überwachungsstromkreis angeschlossen sein oder er kann in Reihe mit den Schutzgasschaltern 11 in den Überwachungsstromkreis zur Überfüllsicherung geschaltet sein. Wird der Hohlraum 7 des Schwimmers 4 beispielsweise durch Korrosionseinwirkung undicht, so entweicht das Gas und der Überdruck im Hohlraum 7 fällt auf das Niveau des Umgebungsdrucks ab. Hierdurch öffnet der Druckschalter 13 und unterbricht den Überwachungsstromkreis.

Zur Kontrolle ihrer Funktion ist die beschriebene Füllstandsmeßvorrichtung mit einer fernsteuerbaren Betätigungsvorrichtung 15 versehen. Die Betätigungsvorrichtung 15 besteht aus einem Magnetanker 16, der in einer von der Außenseite in eine Gewindebohrung in der Platte 1 eingeschraubten Hülse 17 angeordnet ist. Das freie Ende der Hülse 17 ist durch einen Stopfen 18 verschlossen. Auf die Hülse 17 ist eine Magnetspule 19 aufgesteckt, die durch eine mit dem Stopfen 18 verschraubte Mutter in axialer Richtung gehalten wird. An dem Magnetanker 16 ist ein Ende 20 eines Seils 21 aus korrosionsbeständigem Draht befestigt. Das Seil 21 erstreckt sich durch eine Bohrung in der Unterseite der Platte 1 und weist an seinem Ende 20 eine Kugel auf, die in eine Bohrung im Magnetanker 16 eingepreßt ist. Das andere Ende des Seils 21 ist mit Flanschring 14 des Schwimmers 4 verbunden. Zwischen der Platte 1 und dem Schwimmer 4 ist das Seil 21 in einer Öse am Anschlagring 9 geführt. Durch das geführte Seil 21 wird der Schwimmer 4 in der in der Zeichnung dargestellten Position gehalten und gegen Verdrehung gegenüber dem Gleitrohr 3 gesichert. Der Magnetanker 16 stützt sich dabei an der Platte 1 ab. Eine genaue Einstellung der Position des Schwimmers 4 in Bezug auf die Schutzgasschalter 11 ist durch eine axiale Veränderung der Position des Anschlagrings 9 auf dem Gleitrohr 3 möglich.

Mit Hilfe der beschriebenen Betätigungsvorrichtung 15 läßt sich der Schwimmer 4 unabhängig vom Füllstand zur Kontrolle der Funktion der Füllstandsmeßvorrichtung betätigen. Hierzu wird, beispielsweise von einer Schaltwarte aus, die Magnetspule 19 durch Anschluß an eine Spannungsquelle erregt, so daß der Magnetanker 16 angezogen und bis zur Anlage an den Stopfen 18 bewegt wird. Hierdurch wird über das Seil 21 der Schwimmer 4 angehoben, wodurch der Permanentmagnet 8 sich soweit von den Schutzgasschaltern 11 entfernt, daß diese selbsttätig öffnen. Aus der dadurch bewirkten Unterbrechung des Überwachungsstromkreises kann geschlossen werden, daß die Füllstandsmeßvorrichtung vorschriftsmäßig arbeitet, d.h. daß auch durch einen Füllstand, der der mit Hilfe der Betätigungsvorrichtung erzeugten Schwimmerstellung entspricht, ein Unterbrechen des Überwachungsstromkreises erreichbar wäre. Damit diese Schlußfolgerung zutreffend ist, darf die Hubkraft der Betätigungsvorrichtung 15 nicht größer sein als die minimale Auftriebskraft, die zum Anheben des Schwimmers 4 genutzt werden kann und die durch das Gewicht des Schwimmers 4 und die Reibung der Schwimmerführung, vermindert um die Vorspannung des Rohres 12, bestimmt wird. Ist die Bewegung des Schwimmers 4, beispielsweise durch Ablagerungen, Krustenbildung, Auskristallisation oder durch andere Störeinflüsse erschwert, so daß er durch die Auftriebskraft nicht mehr bewegt werden kann, so wäre die Betätigungsvorrichtung 15 auf Grund ihrer Dimensionierung ebenfalls nicht zum Anheben des Schwimmers 4 imstande. Trotz Erregung der Magnetspule 19 würde daher der Überwachungsstromkreis geschlossen bleiben, woraus eine Funktionsstörung der Füllstandsmeßvorrichtung zu ersehen ist. Sollte der Schwimmer 4 nach dem Anheben mit Hilfe der Betätigungsvorrichtung 15 auf dem Gleitrohr 3 hängen bleiben und nicht in seine Grundstellung zurückkehren, so ist dies ebenfalls an der Unterbrechung des Überwachungsstromkreises ablesbar, da dieser nach dem Aberregen der Magnetspule 19 wieder geschlossen sein muß. Auch ein Bruch des Seils 21 wird bei der beschriebenen Füllstandsmeßvorrichtung festgestellt, da in diesem Falle der Schwimmer 4 aus der dargestellten Position nach unten bis zur Anlage an der Mutter 10 gleitet und dadurch das Öffnen der Schutzgasschalter 11 bewirkt.

Der Druckschalter 13 und die Betätigungsvorrichtung 15 sind in einem Gehäuse 22 angeordnet, das auf der Platte 1 befestigt ist. Für die Anwendung in explosionsgeschützten Bereichen ist der untere Teil des Gehäuses 22 mit einer isolierenden Kunststoffmasse ausgegossen, die den Druckschalter 13 und die Betätigungsvorrichtung 15 vollständig umschließt. Im oberen Teil des Gehäuses 22 befindet sich eine Klemmenleiste 23, an der der Druckschalter 13, die Magnetspule 19 und die Schutzgasschalter 11 an ein zu einer Schaltwarte führendes Kabel 24 angeschlossen sind. An der Unterseite der Platte 1 ist ein Tauchrohr 25 vorgesehen, welches das Gleitrohr 3 mit dem Schwimmer 4 mit Abstand umgibt und vor einer Beschädigung schützt. Das Tauchrohr 25 wird durch einen Blechsteg 26 gehalten, der auf der Mutter 10 aufliegt. Die Mutter 10 ist durch einen Splint 27 gesichert.

## Patentansprüche

1. Füllstandsmeßvorrichtung, insbesondere für einen Flüssigkeitstank, mit einem beweglich gelagerten Schwimmer (4), der einen Permanentmagneten (8) aufweist und auf oder an einem Gleitrohr (3) aus unmagnetischem Werkstoff gelagert ist, das eine durch Magnetkraft berührungslos betätigbare Schaltvorrichtung (11) enthält und an einer Platte (1) oder einer Verschraubung zum Verschließen einer Tanköffnung angeordnet ist, wobei der Schwimmer (4) unabhängig vom Füllstand durch eine Betätigungsvorrichtung (15) in eine Stellung bewegbar ist, in der eine Betätigung der Schaltvorrichtung erfolgt, **dadurch gekennzeichnet**, daß die Betätigungsvorrichtung (15) einen Magnetanker (16) aufweist, der mit dem Schwimmer (4) durch ein das Anheben des Schwimmers (4) durch Auftrieb nicht beeinträchtigendes Mittel (21) verbunden ist, durch das der Schwimmer (4) in einer Position gehalten wird, in der die Schaltvorrichtung (11) geschlossen ist, und daß der Magnetanker (16) in einer mit der Platte (1) oder der Verschraubung dicht verbundenen und nach außen verschlossenen Hülse (17) aus unmagnetischem Material angeordnet und mit Hilfe einer außen auf der Hülse (17) angeordneten Magnetspule (19) oder einem außen auf der Hülse (17) angeordneten Permanentmagneten bewegbar ist.

2. Füllstandsmeßvorrichtung nach Anspruch 1, dadurch gekennzeichnet, daß die Betätigungskraft der Betätigungsvorrichtung (15) die zum Bewegen des Schwimmers (4) erforderliche minimale Auftriebskraft nicht oder nur geringfügig übersteigt.

3. Füllstandsmeßvorrichtung nach einem der vorhergehenden Ansprüche, dadurch gekennzeichnet, daß die magnetische Betätigungsvorrichtung (15) mechanisch von Hand, elektrisch, pneumatisch oder hydraulisch betätigbar ist.

4. Füllstandsmeßvorrichtung nach einem der vorhergehenden Ansprüche, dadurch gekennzeichnet, daß die Betätigungsvorrichtung (15) einen fernsteuerbaren Antrieb aufweist.

5. Füllstandsmeßvorrichtung nach einem der vorhergehenden Ansprüche, dadurch gekennzeichnet, daß der Magnetanker (16) durch einen auf die Hülse (17) aufsetzbaren Permanentmagneten betätigbar ist.

6. Füllstandsmeßvorrichtung nach einem der Ansprüche 1 bis 4, dadurch gekennzeichnet, daß der Magnetanker (16) durch eine ferngesteuerte Magnetspule (19) betätigbar ist.

7. Füllstandsmeßvorrichtung nach einem der vorhergehenden Ansprüche, dadurch gekennzeichnet, daß der Magnetanker (16) durch ein Seil (21) mit dem Schwimmer (4) verbunden ist.

8. Füllstandsmeßvorrichtung nach einem der vorhergehenden Ansprüche, dadurch gekennzeichnet, daß der Magnetanker (16) durch eine Feder mit dem Schwimmer (4) verbunden ist.

9. Füllstandsmeßvorrichtung nach Anspruch 8, dadurch gekennzeichnet, daß die Feder durch das Gewicht des nicht eingetauchten Schwimmers (4) vorgespannt ist.

10. Füllstandsmeßvorrichtung mit einem als Hohlkörper ausgebildeten Schwimmer (4) nach einem der vorhergehenden Ansprüche, dadurch gekennzeichnet, daß der Hohlraum (7) des Schwimmers (4) ein unter einem Über- oder Unterdruck stehendes Gas enthält und über ein flexibles Rohr (12) an eine Drucküberwachung (13) angeschlossen ist, die bei einer Abweichung des Gasdrucks von dem vorgegebenen Sollwert anspricht.

11. Füllstandsmeßvorrichtung nach Anspruch 10, dadurch gekennzeichnet, daß das flexible Rohr (12) als Feder ausgebildet ist.

12. Füllstandsmeßvorrichtung nach einem der Ansprüche 10 oder 11, dadurch gekennzeichnet, daß das flexible Rohr (12) in Form einer Wendel das Gleitrohr (3) mit Abstand umgibt.

13. Füllstandsmeßvorrichtung nach einem der Ansprüche 10 bis 12, dadurch gekennzeichnet, daß das flexible Rohr (12) durch das Schwimmergewicht vorgespannt ist.

14. Füllstandsmeßvorrichtung nach einem der Ansprüche 10 bis 13, dadurch gekennzeichnet, daß das flexible Rohr (12) am Magnetanker (16) befestigt ist.

## Claims

1. A level measuring device, in particular for a liquid tank, with a movably mounted float (4) which includes a permanent magnet (8) and is mounted on or at a slide tube (3) fabricated of a non-magnetic material, said slide tube accommodating a switching device (11) which is actuatable in a non-contact fashion by magnetic force, and being arranged on a plate (1) or a threaded fitting for closing an opening of a tank, said float (4) being movable independently of the liquid level by an actuation device (15) into a position in which an actuation of said switching device occurs, **characterized in that** said actuation device (15) includes an armature (16) which is connected to said float (4) by a means (21) not impairing the lifting action of said float (4) due to buoyancy, said means maintaining said float (4) in a position in which said switching device (11) is closed, and that said armature (16) is arranged in a sleeve (17) of a nonmagnetic material connected tight with said plate (1) or said threaded fitting and closed relative to the outside, and is movable by means of a magnetic coil (19) disposed on the outside of said sleeve (17) or by means of a permanent magnet disposed on the outside of said sleeve (17).

2. The level measuring device as claimed in claim 1, **characterized in that** the actuation force of said actuation device (15) does not exceed, or exceeds only slightly, the minimum buoyant force necessary for movement of said float (4).

3. The level measuring device as claimed in any one of the preceding claims, **characterized in that** said magnetic actuation device (15) is actuatable mechanically by hand, electrically, pneumatically or hydraulically.

4. The level measuring device as claimed in any one of the preceding claims, **characterized in that** said actuation device (15) includes a remotely controllable operating mechanism.

5. The level measuring device as claimed in any one of the preceding claims, **characterized in that** said armature (16) is actuatable by a permanent magnet adapted to be seated on said sleeve (17).

6. The level measuring device as claimed in any one of the claims 1 to 4, **characterized in that** said armature (16) is actuatable by a remotely controlled magnetic coil (19).

7. The level measuring device as claimed in any one of the preceding claims, **characterized in that** said armature (16) is connected to said float (4) by means of a rope (21).

8. The level measuring device as claimed in any one of the preceding claims, **characterized in that** said armature (16) is connected to said float (4) by means of a spring.

9. The level measuring device as claimed in claim 8, **characterized in that** said spring is biased by the weight of said float (4) when not submerged.

10. The level measuring device with a float (4) configured as a hollow body as claimed in any one of the preceding claims, **characterized in that** the hollow space (7) of said float (4) contains a gas pressurized to above or below atmospheric and is connected to a pressure monitoring device (13) via a flexible tube (12), said monitoring device responding whenever the gas pressure deviates from the predetermined desired value.

11. The level measuring device as claimed in claim 10, **characterized in that** said flexible tube (12) is configured as a spring.

12. The level measuring device as claimed in any one of the claims 10 or 11, **characterized in that** said flexible tube (12) is spaced from and surrounds said slide tube (3) in the form of a helix.

13. The level measuring device as claimed in any one of the claims 10 to 12, **characterized in that** said flexible tube (12) is biased by the weight of said float.

14. The level measuring device as claimed in any one of the claims 10 to 13, **characterized in that** said flexible tube (12) is secured to said armature (16).

## Revendications

1. Dispositif de mesure du niveau, notamment pour un réservoir à liquide, comportant un flotteur (4) monté de façon mobile qui est muni d'un aimant permanent (8) et qui est monté sur ou à un tube de glissement (3) en matériau non-magnétique, ledit tube de glissement comprenant un dispositif de commutation (11) qui est susceptible d'être actionné sans contact par force magnétique, et étant disposé à une plaque (1) ou à un raccord vissé destiné à fermer une ouverture de réservoir, ledit flotteur (4) étant mouvable, indépendamment du niveau, à l'aide d'un dispositif d'actionnement (15), dans une position dans laquelle ledit dispositif de commutation est actionné, **caractérisé en ce que** ledit dispositif d'actionnement (15) comporte une armature d'aimant (16) reliée audit flotteur (4) par l'intermédiaire d'un moyen (21) n'empêchant pas la montée dudit flotteur (4) à cause d'une poussée verticale et à l'aide duquel moyen ledit flotteur (4) est maintenu dans une position dans laquelle ledit dispositif de commutation (11) est fermé, et en ce que ladite armature d'aimant (16) est disposée dans une douille (17) en matériau non-magnétique qui est étanchement reliée à ladite plaque (1) ou audit raccord vissé et est fermée vers l'extérieur, ladite armature d'aimant étant mouvable à l'aide d'une bobine d'aimant (19) disposée sur la face extérieure de ladite douille (17) ou à l'aide d'un aimant permanent disposé sur la face extérieure de ladite douille (17).

2. Dispositif de mesure du niveau selon la revendication 1, **caractérisé en ce que** la force d'actionnement dudit dispositif d'actionnement (15) ne dépasse pas, ou dépasse seulement légèrement, la force ascentionnelle minimale nécessaire pour mouvoir ledit flotteur (4).

3. Dispositif de mesure du niveau selon l'une quelconque des revendications précédentes, **caractérisé en ce que** le dispositif d'actionnement (15) magnétique est susceptible d'être actionné soit par voie mécanique à la main, soit par voie électrique, pneumatique ou hydraulique.

4. Dispositif de mesure du niveau selon l'une quelconque des revendications précédentes, **caractérisé en ce que** ledit dispositif d'actionnement (15) est muni d'un mécanisme de commande télécommandable.

5. Dispositif de mesure du niveau selon l'une quelconque des revendications précédentes, **caractérisé en ce que** ladite armature d'aimant (16) est capable d'être actionnée par un aimant permanent susceptible d'être posé sur ladite douille (17).

6. Dispositif de mesure du niveau selon l'une quelconque des revendications 1 à 4, **caractérisé en ce que** ladite armature d'aimant (16) est capable d'être actionnée par une bobine d'aimant (19) télécommandée.

7. Dispositif de mesure du niveau selon l'une quelconque des revendications précédentes, **caractérisé en ce que** ladite armature d'aimant (16) est reliée audit flotteur (4) par l'intermédiaire d'un câble (21).

8. Dispositif de mesure du niveau selon l'une quelconque des revendications précédentes, **caractérisé en ce que** ladite armature d'aimant (16) est reliée audit flotteur (4) par l'intermédiaire d'un ressort.

9. Dispositif de mesure du niveau selon la revendication 8, **caractérisé en ce que** ledit ressort est précontraint par le poids dudit flotteur (4) non-immersé.

10. Dispositif de mesure du niveau comprenant un flotteur (4) en forme d'un corps creux selon l'une quelconque des revendications précédentes, **caractérisé en ce que** l'espace creux (7) dudit flotteur (4) contient un gaz soumis à une surpression ou à une dépression et est relié, par l'intermédiaire d'un tube flexible (12), à un dispositif de surveillance de pression (13) qui répond au moment où la pression du gaz s'écarte de la valeur prédéterminée.

11. Dispositif de mesure du niveau selon la revendication 10, **caractérisé en ce que** ledit tube flexible (12) est réalisé sous forme d'un ressort.

12. Dispositif de mesure du niveau selon l'une quelconque des revendications 10 ou 11, **caractérisé en ce que** ledit tube flexible (12) entoure ledit tube de glissement (3) à une distance en forme d'une hélice.

13. Dispositif de mesure du niveau selon l'une quelconque des revendications 10 à 12, **caractérisé en ce que** ledit tube flexible (12) est précontraint par le poids dudit flotteur.

14. Dispositif de mesure du niveau selon l'une quelconque des revendications 10 à 13, **caractérisé en ce que** ledit tube flexible (12) est attaché à ladite armature d'aimant (16).
